# FASCICULE DE BREVET EUROPEEN

(11) **EP 1 361 688 B1**
(45) Date de publication et mention de la délivrance du brevet: **28.09.2005**
(21) Numéro de dépôt: 02291135.8
(22) Date de dépôt: 06.05.2002
(51) Int. Cl.: H04J 14/02, H04B 10/00, H04Q 11/00

(54) **Procédé de transmission protégée sur un réseau à multiplexage spectral**
Verfahren zur geschützten Übertragung in einem WDM-Netzwerk
Method of protected transmission on a WDM network

(43) Date de publication de la demande: 12.11.2003
(73) Titulaire: ALCATEL, 75008 Paris (FR)
(72) Inventeur: Lovisa, Stéphane, 75014 Paris (FR); Schiavoni, Francesco, 91120 Palaiseau (FR); Balland, Guy, 75013 Paris (FR); Rossi, Emmanuel, 75014 Paris (FR)
(74) Mandataire: Sciaux, Edmond

(56) Documents cités:
- EP-A- 1 113 587
- WO-A-01/33756
- WO-A-02/17533
- US-A- 6 075 629

## Description

L'invention concerne les procédés de protection entre des noeuds de réseaux optiques de communication, et en particulier des procédés de protection appliqués sur des réseaux à protection SNCP, c'est-à-dire à dédoublage de câblage.

Il est connu de protéger des données émises entre deux noeuds d'un réseau de communication optique en doublant le câblage entre ces noeuds. Le câblage comprend un câblage servant de ligne principale et un câblage servant de ligne de secours. Les données sont émises par un noeud sur la ligne principale par défaut. Le noeud récepteur renvoie un accusé de réception lorsqu'il reçoit correctement les données émises. Lors d'une défaillance sur la ligne principale, le noeud récepteur n'émet pas d'accusé de réception. Le noeud émetteur détecte alors une défaillance sur la ligne principale et émet une demande de commutation sur la ligne de secours. Les noeuds commutent alors sur la ligne de secours pour communiquer les données. Ce procédé présente des inconvénients. Ce procédé ne permet pas d'exploiter la capacité matérielle du réseau, puisque la ligne de secours n'est pas utilisée en l'absence de défaillance. De la bande passante est ainsi perdue.

La recommandation ITU-T G.841 propose d'utiliser un protocole appelé MSP. Ce protocole s'applique à des trames SDH uniquement. La recommandation propose d'inclure des informations de commutation dans les octets K1/K2 d'une trame SDH. L'application de cette recommandation à la protection du trafic entre deux noeuds est la suivante : la ligne principale est utilisée pour la transmission des données protégées en l'absence de défaillance sur cette ligne. La ligne de secours est utilisée pour la transmission de données additionnelles toujours en l'absence de défaillance de la ligne principale. Lors d'une défaillance de la ligne principale, un premier noeud détecte cette défaillance. Ce premier noeud interrompt l'émission du trafic additionnel sur la ligne de secours et émet le trafic protégé sur la ligne de secours. L'entête des trames SDH émises par le premier noeud contient une requête en commutation sur la ligne de secours. Lorsque le deuxième noeud reçoit cette requête, il commute son émission de trafic protégé sur la ligne de secours.

Ce procédé présente plusieurs inconvénients. Il impose d'une part une intervention des noeuds sur les trames SDH reçues afin d'interpréter ou modifier le contenu de l'entête. Ainsi, on ne peut pas utiliser un noeud transparent aux trames. Des transpondeurs, tels que ceux commercialisés par la société Alcatel sous la référence Metro Span 1696, prévus pour transmettre les trames sans les modifier, ne peuvent notamment pas être utilisés. D'autre part, de nombreux protocoles tels que Escon, GE ou FDDI ne présentent pas d'octets d'entête susceptibles de contenir une requête en commutation de ligne.

La recommandation G709 propose un procédé d'encapsulation des données protégées dans une nouvelle trame comprenant des entêtes ODU et OTU, ainsi qu'un correcteur d'erreur FEC. Le forum de discussion G798 propose un procédé de protection dénommé en anglais « OTU-Trail protection », basée sur l'utilisation de l'encapsulation définie dans la G709. Selon ce procédé, les entêtes de la nouvelle trame comprennent des octets APS contenant des requêtes en commutation. Ce procédé permet d'émettre des requêtes en commutation pour des trames de différents types.

Ce procédé de protection présente des inconvénients. D'une part, ce procédé impose une lecture ou une écriture des octets APS de l'entête. D'autre part, ce procédé n'est pas utilisable avec des transpondeurs incapables d'intervenir sur les entêtes.

On pourrait également envisager de transmettre des informations de commutation sur le canal de supervision optique OSC joignant différents noeuds. Les protocoles utilisés pour communiquer sur le canal OSC ne comprennent pas assez d'octets par trame pour pouvoir transférer toute l'information afférente aux différentes longueurs d'onde transmises entre les noeuds. Le canal OSC est donc insuffisant pour transmettre des informations de communication pour un grand nombre de canaux avec les protocoles actuels. Le développement d'un éventuel protocole de gestion de commutation adéquat sur le canal OSC requérrait en outre un coût temporel et financier important.

Le document W001/33756 divulgue les caractéristiques du préambule de la revendication 1.

Le document intitulé "Fast revertible restoration scheme for dual-ring networks" par Ko K W et al., "Computers and Communications", Second IEEE Symposium on Alexandria, Egypte, 1-3 juillet 1997, Los Alamitos, CA, USA, IEEE Comput. Soc, pages 661-665, XP010241431 décrit quant à lui des procédés de restoration dans des réseaux à double anneaux.

Il existe donc un besoin pour un procédé de protection de transmission qui résolve un ou plusieurs de ces inconvénients. L'invention concerne ainsi un procédé de protection de transmission entre deux noeuds d'un réseau optique reliés par une ligne bi-directionnelle principale et par une ligne bi-directionnelle de secours, comprenant les étapes de transmission de données protégées sur la ligne principale ; de transmission de données supplémentaires sur la ligne de secours ; d'interruption de l'émission de données sur la ligne principale par un noeud et émission des données protégées sur la ligne de secours par ce noeud, suite à la détection d'une perte de signal en réception par ce noeud.

Selon une variante, la détection de perte de signal est réalisée en détectant une perte d'horloge.

Selon encore une variante, l'interruption de l'émission sur la ligne principale comprend l'extinction du laser de ce noeud qui émet sur la ligne principale.

Selon une autre variante, suite à l'étape d'interruption et d'émission sur la ligne de secours, le procédé comprend en outre les étapes d'envoi spontané d'un signal de test sur la ligne principale par ce noeud ; lorsque ce noeud reçoit un signal de test sur la ligne principale, il envoie un signal d'accusé de réception sur la ligne principale.

Selon encore une autre variante, lorsqu'il reçoit un signal d'accusé de réception, le noeud interrompt l'émission des données protégées sur la ligne de secours et le noeud émet les données protégées sur la ligne principale.

On peut encore prévoir que le procédé comprend en outre les étapes d'envoi d'un signal de confirmation sur la ligne principale par un noeud lorsqu'il a reçu un accusé de réception ; d'interruption d'émission des données protégées sur la ligne de secours par ce noeud et émission des données protégées sur la ligne principale par ce noeud.

Selon une variante, les signaux de test, d'accusé de réception, et le cas échéant de confirmation, sont des impulsions se distinguant par leur durée d'impulsion.

D'autres caractéristiques et avantages de l'invention apparaîtront à la lecture de la description qui suit de modes de réalisation de l'invention, donnée à titre d'exemple et en référence aux dessins annexés qui montrent :
- figure 1, une représentation schématique d'un sous-ensemble d'un réseau optique mettant en oeuvre l'invention ;
- figure 2, un exemple de chronogramme des événements sur les noeuds de la figure 1 lors de la commutation des données protégées sur la ligne de secours ;
- figure 3, un exemple de chronogramme des évènements sur les noeuds pour la reprise de la transmission sur la ligne principale.

L'invention propose ainsi de détecter une perte de signal sur la ligne principale par un noeud, puis d'interrompre l'émission sur la ligne principale par ce noeud. L'interruption d'émission permet ainsi d'imposer une perte de signal sur l'autre noeud : l'autre noeud commute alors son émission de données protégées sur la ligne de secours.

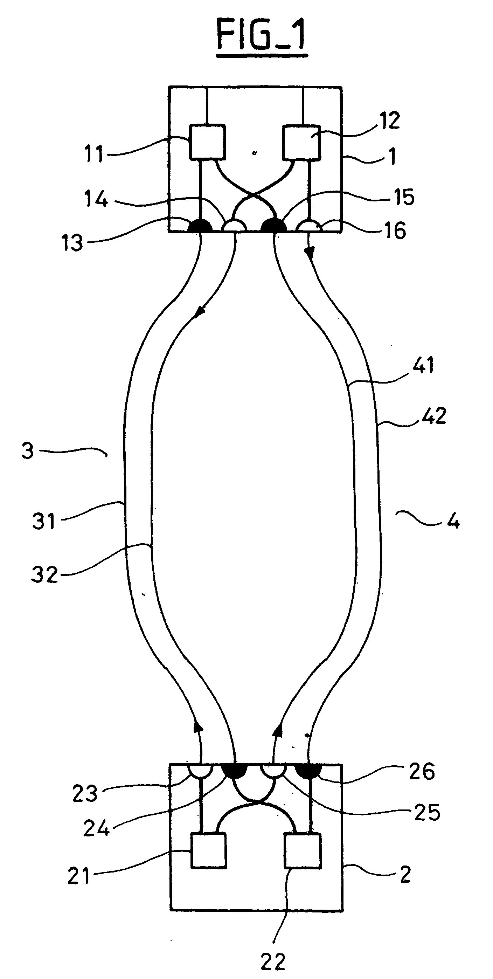

La figure 1 représente un sous-ensemble appartenant à un réseau de transmission par fibre optique. Le sous-ensemble présente des noeuds 1 et 2 reliés ensemble d'une part par une liaison bidirectionnelle principale 3 et d'autre part par une liaison bidirectionnelle de secours 4. La figure illustre uniquement la partie du réseau optique du réseau liant les noeuds 1 et 2. Chaque noeud 1 ou 2 présente une diode laser d'émission 14 ou respectivement 23 reliée à la ligne principale 3, et une diode laser d'émission 16 ou respectivement 25 reliée à la ligne de secours 4. Chaque noeud 1 ou 2 présente également un récepteur 13 ou respectivement 24 relié à la ligne principale 3, et un récepteur 15 ou respectivement 26 relié à la ligne de secours 4. Les éléments optiques 13 à 16 sont reliés respectivement aux éléments optiques 23 à 26 par l'intermédiaire de fibres optiques 31, 32, 41 et 42 formant la ligne principale et la ligne de secours. Les noeuds 1 et 2 présentent respectivement des commandes 12 et 21 assurant le contrôle de l'émission des diodes laser 14, 16 et 23, 25 par tout moyen approprié. Les noeuds 1 et 2 présentent également respectivement des modules de traitement 11 et 22 assurant le traitement des données provenant des récepteurs 13, 15 et 24, 26 par tout moyen approprié.

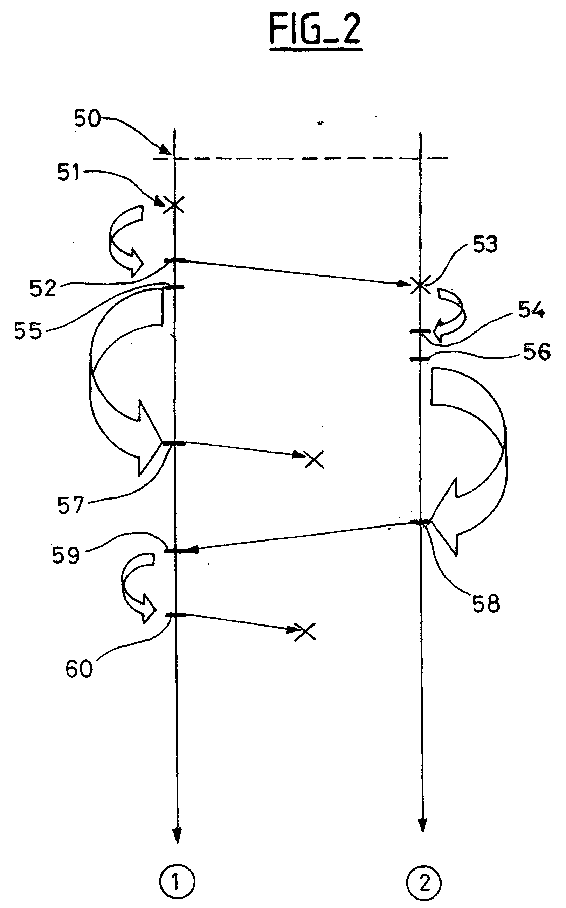

On va maintenant décrire en référence à la figure 2 le fonctionnement du procédé mis en oeuvre selon l'invention. Le chronogramme de gauche représente les évènements sur le noeud 1 et le chronogramme de droite représente les évènements sur le noeud 2. Avant l'instant 50, les noeuds 1 et 2 s'échangent des données protégées sur la liaison principale 3 et des données supplémentaires sur la ligne de secours. A l'instant 50, la communication est interrompue sur la ligne principale au moins dans le sens du noeud 2 vers le noeud 1. Cette interruption est par exemple due à une rupture accidentelle de la fibre 31. A l'instant 51, le noeud 1 détecte une perte de signal sur la ligne principale. Plus précisément, le noeud 1 ne reçoit pas de signal sur son récepteur 13 et détecte donc dans le module de traitement 11 une perte d'horloge. Classiquement, un composant optronique d'un noeud oscille à la fréquence nominale du signal reçu et récupère ainsi l'horloge du signal. En absence de signal reçu, un noeud détecte donc une perte d'horloge. On utilise de préférence une détection de perte d'horloge, car la détection de perte d'horloge n'est pas sensible au bruit sur la ligne. L'oscillateur n'est en effet pas susceptible de récupérer une horloge à partir de bruits remplaçant le signal. A contrario, la simple détection d'absence de signal sur la ligne peut être erronée du fait de l'amplification des bruits à l'entrée du noeud. A l'instant 52, le noeud 1 interrompt l'émission de données sur la ligne principale. Ainsi, même si la fibre 32 est encore utilisable pour émettre du noeud 1 vers le noeud 2, on interrompt délibérément cette émission afin que le noeud 2 soit malgré tout informé d'un problème sur la ligne 3. Alors, à l'instant 53, le noeud 2 détecte une perte de signal sur la ligne principale, de façon similaire au noeud 1. Le fonctionnement du noeud 2 est alors similaire à celui du noeud 1 : à l'instant 54, le noeud 2 interrompt l'émission sur la ligne principale. Lorsqu'un noeud détecte un problème de transmission sur la ligne, il doit informer l'autre noeud de ce problème. L'autre noeud peut alors interrompre l'émission sur la ligne pour respecter les normes de sécurité en vigueur.

L'interruption d'émission sur la ligne principale peut par exemple être réalisée par extinction du laser du noeud émettant sur cette ligne. De façon similaire, on pourrait également envisager d'interrompre l'émission en allumant le laser du noeud en continu. Ces deux modes d'interruption d'émission permettent de générer une perte d'horloge sur le noeud en vis-à-vis. On peut prévoir une extinction d'une durée prédéterminée adéquate pour être détectée par l'autre noeud.

Suite aux détections respectives de pertes de signal, les noeuds 1 et 2 commencent ensuite à émettre les données protégées sur la ligne de secours 4, respectivement aux instants 55 et 56. Par ailleurs, on peut prévoir de réaliser un multiplexage temporel sur la ligne de secours afin d'émettre des données protégées et des données supplémentaires sur cette ligne lorsque le débit des données protégées est suffisamment faible. Un tel multiplexage permet alors de ne pas perdre l'intégralité du trafic supplémentaire. On supprime généralement préalablement l'émission de données supplémentaires sur la ligne de secours 4 pour favoriser l'émission des données protégées sur cette ligne.

On obtient ainsi un moyen de protection de données par commutation sur la ligne de secours particulièrement simple et fiable. Ce moyen de protection ne nécessite quasiment aucune modification matérielle des noeuds et peut par exemple être mis en oeuvre par reprogrammation d'une EPROM d'un noeud. L'utilisation de l'interruption d'émission pour informer l'autre noeud d'un problème sur la ligne principale est également particulièrement rapide du fait de la simplicité du mode d'information. On ne fait en outre pas appel à un protocole de communication chiffré particulier pour assurer la commutation sur la ligne de secours, ce qui permet à la fois d'utiliser des transpondeurs transparents aux données transportées, de ne pas limiter la protection seulement à un protocole prédéfini et de ne pas nécessiter la définition d'un protocole d'encapsulation. De plus, ce procédé s'applique aussi bien lorsque la coupure de communication affecte un seul ou les deux sens de la ligne principale 3.

Une variante de l'invention propose également un procédé de test et de réutilisation de la ligne principale. La figure 2 illustre également la phase de test de la ligne principale par les noeuds 1 et 2, lorsque la transmission sur cette ligne présente un problème. Selon cette variante, les noeuds émettent spontanément, et de préférence à intervalles réguliers, des signaux de test sur la ligne principale 3. Ainsi, à l'instant 57, le noeud 1 émet spontanément un signal de test sur la fibre 32 de la ligne 1. Dans l'hypothèse citée auparavant, seule la fibre 32 est coupée et le signal de test ne parvient donc pas au noeud 2. Le noeud 2 se contente alors d'émettre spontanément des signaux de test à intervalles réguliers. Dans l'hypothèse précédente, la fibre 31 est fonctionnelle. Le noeud 1 reçoit donc le signal de test sur le récepteur 13 à l'instant 59. En réponse, la commande 12 fait émettre un signal d'accusé de réception par l'émetteur 14 à l'instant 60. Ce signal ne parvient alors pas au noeud 2, comme représenté à la figure 2.

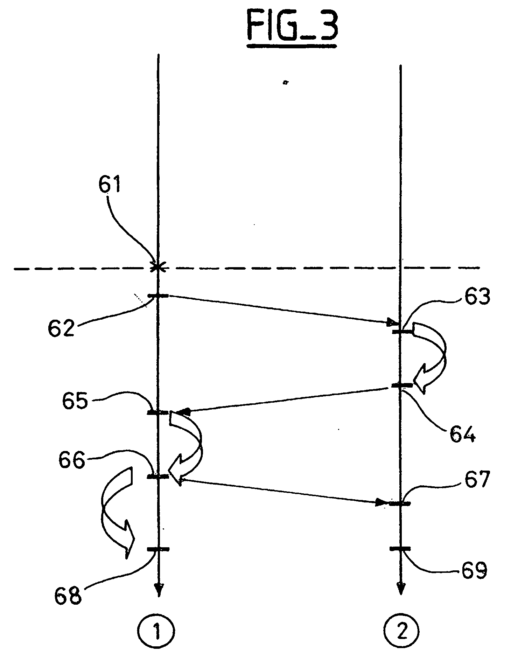

La figure 3 représente un chronogramme de test et de reprise de communication sur la ligne principale, lorsque les problèmes de communication sur la ligne principale sont résolus. A l'instant 61, les problèmes de communication sur la ligne 3 sont résolus. Selon le procédé décrit précédemment, le noeud 1 émet spontanément un signal de test sur la ligne 3 à l'instant 62. A l'instant 63, le signal de test est reçu et traité par le noeud 2. La commande 21 fait alors émettre un signal d'accusé de réception par l'émetteur 23 à l'instant 64. Le signal d'accusé de réception est reçu à l'instant 65 par le noeud 1. Le noeud 1 détermine alors que la communication est rétablie dans les deux sens sur la liaison 3. On peut prévoir que le noeud 1 émette un signal de confirmation sur la ligne 3 à l'instant 66, afin d'informer le noeud 2 que la ligne est rétablie dans les deux sens. On peut prévoir un signal de confirmation différent du signal d'accusé de réception. Ainsi, lors de la réception d'un accusé de réception ou d'une confirmation, un noeud peut déterminer s'il doit ou non envoyer encore une confirmation. Dans l'exemple, la confirmation est reçue à l'instant 67 par le noeud 2.

Les noeuds 1 et 2 reprennent alors la transmission des données protégées sur la ligne principale 3. La transmission de données supplémentaires sur la ligne de secours 4 peut alors reprendre le cas échéant.

Le procédé de test décrit permet ainsi une reprise de la communication sur la ligne principale 3 en l'absence d'intervention d'un opérateur. La reprise de la communication est effectuée de façon autonome par les noeuds. La reprise de la communication sur la ligne principale peut alors également être réalisée sans émettre de données sur la ligne de secours destinées à indiquer cette reprise.

Les signaux de test, d'accusé de réception et de confirmation peuvent prendre la forme d'impulsions. La distinction entre les signaux de test, d'accusé de réception et de confirmation peut être réalisée par tout moyen approprié. Dans le cas de signaux sous forme d'impulsions, on peut utiliser une durée impulsionnelle durée différente pour chaque type de signal. On peut par exemple prévoir des signaux d'accusé de réception ayant une durée impulsionnelle atteignant le double de la durée impulsionnelle des signaux de test. On peut également utiliser des signaux de test, d'accusé de réception et de confirmation peuvent prendre la forme de signaux d'horloge, modulés en fréquence ou en phase. On peut alors distinguer les différents signaux par leur fréquence de modulation ou leur phase.

Bien entendu, la présente invention n'est pas limitée aux exemples et modes de réalisation décrits et représentés, mais elle est susceptible de nombreuses variantes accessibles à l'homme de l'art. On peut ainsi envisager des noeuds présentant une structure autre que celle exposée auparavant. Par ailleurs, bien qu'on ait représenté à la figure 1 deux noeuds raccordés ensemble, le procédé de protection peut également s'appliquer à deux noeuds raccordés par des lignes principale et de secours munies d'autres noeuds intermédiaires.

## Revendications

1. Procédé de protection de transmission entre deux noeuds (1,2) d'un réseau optique reliés par une ligne bi-directionnelle principale (3) et par une ligne bi-directionnelle de secours (4), comprenant les étapes de :
- transmission de données protégées sur la ligne principale ;
- transmission de données supplémentaires sur la ligne de secours ;
- suite à la détection d'une perte de signal en réception (51,53) par l'un des noeuds, interruption de l'émission de données (52,54) sur la ligne principale par ce noeud et émission des données protégées sur la ligne de secours (55,56) par ce noeud, l'interruption de l'émission sur la ligne principale comprenant l'extinction du laser de ce noeud qui émet sur la ligne principale;
et **caractérisé en ce que**, suite à l'étape d'interruption de l'émission de données (52,54) sur la ligne principale par ce noeud et d'émission sur la ligne de secours, le procédé comprend en outre les étapes de :
- envoi spontané d'un signal de test (57,58, 62) sur la ligne principale par ce noeud ;
- lorsque ce noeud reçoit un signal de test sur la ligne principale, il envoie un signal d'accusé de réception (60, 64) sur la ligne principale.

2. Le procédé de la revendication 1, **caractérisé en ce que** la détection de perte de signal est réalisée en détectant une perte d'horloge.

3. Le procédé de la revendication 1, **caractérisé en ce que**, lorsqu'il reçoit un signal d'accusé de réception, le noeud interrompt l'émission des données protégées sur la ligne de secours et le noeud émet les données protégées sur la ligne principale (68, 69).

4. Le procédé de la revendication 1, **caractérisé en ce qu'**il comprend en outre les étapes d' :
- envoi d'un signal de confirmation (66) sur la ligne principale par l'un des noeuds lorsqu'il a reçu un accusé de réception ; et
- interruption d'émission des données protégées sur la ligne de secours par ce noeud et émission des données protégées sur la ligne principale par ce noeud (68, 69).

5. Le procédé de l'une des revendications 1 et 4, **caractérisé en ce que** les signaux de test, d'accusé de réception, et, le cas échéant, de confirmation, sont des impulsions se distinguant par leur durée d'impulsion.

## Patentansprüche

1. Verfahren zum Schutz der Übertragung zwischen zwei Knoten (1, 2) eines optischen Netzes, die über eine bidirektionale Hauptleitung (3) und eine bidirektionale Reserveleitung (4) miteinander verbunden sind, beinhaltend die Schritte
- der Übertragung von geschützten Daten über die Hauptleitung,
- der Übertragung von zusätzlichen Daten über die Reserveleitung
- und ferner nach Erkennung eines Signalverlustes (51, 53) beim Empfang durch einen der Knoten der Unterbrechung der Aussendung von Daten (52, 54) über die Hauptleitung durch diesen Knoten und der Aussendung der geschützten Daten über die Reserveleitung (55, 56) durch diesen Knoten, wobei die Unterbrechung der Aussendung über die Hauptleitung die Ausschaltung des Lasers dieses auf der Hauptleitung sendenden Knotens beinhaltet, und
**dadurch gekennzeichnet, daß** nach dem Schritt der Unterbrechung der Aussendung von Daten (52, 54) über die Hauptleitung durch diesen Knoten und der Aussendung über die Reserveleitung das Verfahren ferner die Schritte
- einer spontanen Aussendung eines Testsignals (57, 58, 62) über die Hauptleitung durch diesen Knoten sowie
- den Schritt, daß dieser Knoten, wenn er ein Testsignal über die Hauptleitung empfängt, ein Empfangsbestätigungssignal (60, 64) über die Hauptleitung sendet,
beinhaltet.

2. Verfahren gemäß Anspruch 1, **dadurch gekennzeichnet, daß** die Erkennung eines Signalverlustes durch Erkennen eines Taktsignalverlustes bewerkstelligt wird.

3. Verfahren gemäß Anspruch 1, **dadurch gekennzeichnet, daß** der Knoten, wenn er ein Empfangsbestätigungssignal empfängt, die Aussendung der geschützten Daten über die Reserveleitung unterbricht und die geschützten Daten über die Hauptleitung (68, 69) sendet.

4. Verfahren gemäß Anspruch 1, **dadurch gekennzeichnet, daß** dieses ferner die Schritte
- des Versendens eines Bestätigungssignals (66) über die Hauptleitung durch einen der Knoten, wenn er eine Empfangsbestätigung empfangen hat, und
- die Unterbrechung der Aussendung der geschützten Daten über die Reserveleitung durch diesen Knoten und die Aussendung der geschützten Daten über die Hauptleitung durch diesen Knoten (68, 69)
beinhaltet.

5. Verfahren gemäß einem der Ansprüche 1 und 4, **dadurch gekennzeichnet, daß** die Test-, Empfangsbestätigungs- und gegebenenfalls Bestätigungssignale Impulse sind, die sich durch ihre Impulsdauer unterscheiden.

## Claims

1. A method of protecting transmission between two nodes (1, 2) of an optical network that are interconnected via a main both-way line (3) and via a backup both-way line (4), said method comprising the following steps:
- transmitting protected data over the main line;
- transmitting additional data over the backup line; and
- after loss of signal on reception (51, 53) has been detected by one of the nodes, interrupting transmission of data (52, 54) over the main line by said node, and having the protected data transmitted over the backup line (55, 56) by said node, interrupting transmission over the main line comprising switching off the laser of said node that is transmitting over the main line;
said method being **characterized in that** after the step of interrupting transmission of data (52, 54) over the main line by said node and of transmitting over the backup line, the method further comprises the following steps:
- having a test signal (57, 58, 62) sent spontaneously over the main line by said node; and
- when said node receives a test signal over the main line, having it send an acknowledgement of receipt signal (60, 64) over the main line.

2. The method of claim 1, **characterized in that** loss of signal is detected by detecting loss of clock.

3. The method of claim 1, **characterized in that**, when it receives an acknowledgement of receipt signal, the node interrupts transmission of the protected data over the backup line, and the node transmits the protected data over the main line (68, 69).

4. The method of claim 1, **characterized in that** it further comprises the following steps:
- having a confirmation signal (66) sent over the main line by one of the nodes when it has received an acknowledgement of receipt; and
- interrupting transmission of the protected data over the backup line by said node, and having the protected data transmitted over the main line by said node (68, 69).

5. The method of claim 1 or claim 4, **characterized in that** the test, acknowledgement of receipt, and optionally confirmation signals are pulses which can be distinguished by their pulse durations.
